# EUROPEAN PATENT SPECIFICATION

(11) **EP 1 267 203 B1**
(45) Date of publication and mention of the grant of the patent: **23.03.2005**
(21) Application number: 02012946.6
(22) Date of filing: 11.06.2002
(51) Int. Cl.: G03B 23/04, B65G 59/06

(54) **Slide scanner with means for separating the slides from a stack**
Diascanner mit Mitteln zum Trennen der Dias von einem Stapel
Numériseur pour diapositives ayant des moyens pour séparer des caches dans une pile

(30) Priority: 14.06.2001 JP 2001180463
(43) Date of publication of application: 18.12.2002
(60) Divisional application: 04004360.6
(73) Proprietor: Fuji Photo Film Co., Ltd., Minami-Ashigara-shi, Kanagawa (JP)
(72) Inventor: Tsuji, Junichi, Fuji Photo Film Co., Ltd., Ashigarakami-gun (JP)
(74) Representative: Klunker . Schmitt-Nilson . Hirsch

(56) References cited:
- EP-A- 1 191 388
- CH-A- 315 931
- DE-B- 1 259 116
- GB-A- 803 185
- US-A- 3 598 483
- US-A- 3 790 268
- US-A- 3 862 800
- PATENT ABSTRACTS OF JAPAN vol. 1999, no. 14, 22 December 1999 (1999-12-22) -& JP 11 249238 A (MINOLTA CO LTD), 17 September 1999 (1999-09-17)

## Description

### BACKGROUND OF THE INVENTION

### 1. Field of the Invention

The present invention relates to a slide mount supply device. More particularly, the present invention relates to a slide mount supply device for supplying plural slide mounts from a slide mount cartridge, in which jamming of slide mounts can be prevented.

### 2. Description Related to the Prior Art

There is an image reading technique in which a CCD or other reading sensors read a frame image from photo film photoelectrically. Digital image data is obtained by the reading, and subjected to image processing of enlargement, compression, compensation, correction of various types and the like. According to the image data after the processing, laser light is modulated, and applied to recording medium to produce a print of the frame image.

A photo film carrier is used for the image reading, and is loaded with slide mounts having a frame image. Each of the slide mounts includes a reversal photo film piece and a mount panel. The mount panel is attached to the periphery of the photo film piece. Automated types of the photo film carrier are disclosed in JP-Y 2521693 (corresponding to JP-U 5-011149) and JP-A 11-112714. A feeder mechanism is incorporated in the photo film carrier for feeding the slide mounts automatically for the purpose of efficiently reading the frame image.

The photo film carrier according to JP-A 11-112714 includes a supply cartridge, a feeder roller mechanism, and a withdrawing cartridge. A supply cartridge accommodates a stack of plural slide mounts stacked vertically. The feeder roller mechanism feeds the slide mounts one after another from a lower end of the supply cartridge. The withdrawing cartridge receives the slide mounts after being read for images, and stacks those in an upward direction. In the photo film carrier, a blocking plate is disposed at a slide mount passage slot in the supply cartridge. The blocking plate adjusts openness of the passage slot according to a thickness of the slide mounts, to prevent multi-feeding of the slide mounts.

There is a difference between a material of the photo film piece and material of the mount panel. It is likely that a bulged state occurs with time at one of middle portions of side lines of the mount panel in comparison with corner portions, because of the layered structure of the two characteristically different materials. Furthermore, excessive flexibility may cause a problem typically due to softness of the mount panel. If the mount panel is formed from soft resin of a synthetic type, the middle portions may be suspended with its weight in comparison with the corner portions of the mount panel. The slide mounts with the bulged state of any of those types may be mixed with normal slide mounts. Bulged portions of the slide mounts are likely to collide with one another, to cause the multi-feeding which is harmful to continuous supply of the slide mounts. For example, an inner edge of the mount panel of the lowest one of the slide mounts comes to interfere with an inner edge or the mount panel of the second lowest of the slide mounts. Even through the second lowest slide mount is blocked by the blocking plate, the lowest slide mount continues receiving pushing force. It is likely that jamming occurs at a passage slot of the supply cartridge.

CH 315 931 A discloses a slide mount supply device having a cartridge of tubular shape for containing a plurality of slide mounts arranged horizontally. A feeder mechanism feeds the first slide mount out of the cartridge, thereby making use of a slide mount separator including a pair of rollers, which are biased against the next following slide mount.

### SUMMARY OF THE INVENTION

In view of the foregoing problems, the object of the present invention is to provide a slide mount supply device for supplying plural slide mounts from a slide mount cartridge, in which jamming of slide mounts can be prevented.

In order to achieve the above and other objects and advantages of this invention, a slide mount supply device according to claim 1 is provided. Each of the slide mounts includes a photo film piece having an image frame. A mount panel is disposed about and secured to the photo film piece. In the slide mount supply device, a cartridge has a tubular shape, for containing the plural slide mounts stacked vertically. A feeder mechanism feeds a lowest slide mount among the plural slide mounts to an outside of the cartridge. A slide mount separator separates the mount panel of the lowest slide mount from the mount panel of a second lowest slide mount among the plural slide mounts, to ensure feeding of the feeder mechanism.

The slide mount separator is a separator projection upwardly projecting from a rear position of the feeder mechanism.

The feeder mechanism pushes a rear edge of the lowest slide mount. The slide mount separator pushes up a rear portion of the second lowest slide mount over the lowest slide mount.

Furthermore, a path base member is disposed downstream from the feeder mechanism, and on the path base member, the slide mount being fed is passed. A recess is formed in the path base member, has a smaller size than a size of the slide mount in a direction crosswise to a feeding direction thereof, for preventing interference between a middle portion of the slide mount and the path base member if the middle portion is bulged.

The feeder mechanism includes a feeder base member for moving under the lowest slide mount. A claw portion is formed erectly on the feeder base member, for pushing the rear edge of the lowest slide mount.

Furthermore, a multi-feeding eliminator blocks a front end of the second lowest slide mount, to prevent the second lowest slide mount from moving together with the lowest slide mount in the feeding direction.

The cartridge includes a passage slot, formed in a lower portion of a lateral wall, for advancing the lowest slide mount. The multi-feeding eliminator is secured to the cartridge outside the passage slot movably, has a lower edge disposed at a predetermined space from the path base member, the predetermined space being according to a thickness of the slide mount being fed.

Furthermore, a bias spring biases the multi-feeding eliminator in a direction opposite of the feeding direction.

The cartridge further includes a lower opening, being open downwards, and having a first side line in connection with which the passage slot is formed. A pair of lower support ridges are formed along second and third side lines of the lower opening extending in the feeding direction, for supporting edge portions of a lower face of the lowest slide mount.

Consequently, jamming of slide mounts can be prevented in the slide mount supply device, because the slide mount separator separates the mount panels of the lowest and second lowest slide mounts from one another.

### BRIEF DESCRIPTION OF THE DRAWINGS

The above objects and advantages of the present invention will become more apparent from the following detailed description when read in connection with the accompanying drawings, in which:
Fig. 1 is a perspective illustrating a photo film carrier;
Fig. 2 is an exploded perspective illustrating a supply cartridge for a stack of slide mounts;
Fig. 3 is an explanatory view in section, illustrating the slide mounts, the supply cartridge and a feeder mechanism in a state of standby;
Fig. 4 is an explanatory view in section, illustrating the same as Fig. 3 but in which the feeder mechanism starts feeding a lowest slide mount;
Fig. 5 is an explanatory view in section, illustrating the same as Fig. 3 but in which a separator projection separates a second lowest slide mount from the lowest;
Fig. 6 is an explanatory view in section, illustrating the same as Fig. 3 but in which the feeder mechanism returns to its original position;
Fig. 7 is an explanatory view in front elevation, illustrating the photo film carrier;
Fig. 8 is an explanatory view in plan, illustrating the photo film carrier;
Fig. 9 is a cross section, partially broken, illustrating the lowest and second lowest slide mounts;
Fig. 10 is a cross section, partially broken, illustrating the same as Fig. 9 but in which the lowest slide mount is advancing separately from the second lowest;
Fig. 11 is an explanatory view in front elevation, illustrating a structure in which a path recess is formed in a path base plate; and
Fig. 12 is an explanatory view in side elevation, illustrating a slide mount passing on the path base plate with the path recess.

### DETAILED DESCRIPTION OF THE PREFERRED EMBODIMENT(S) OF THE PRESENT INVENTION

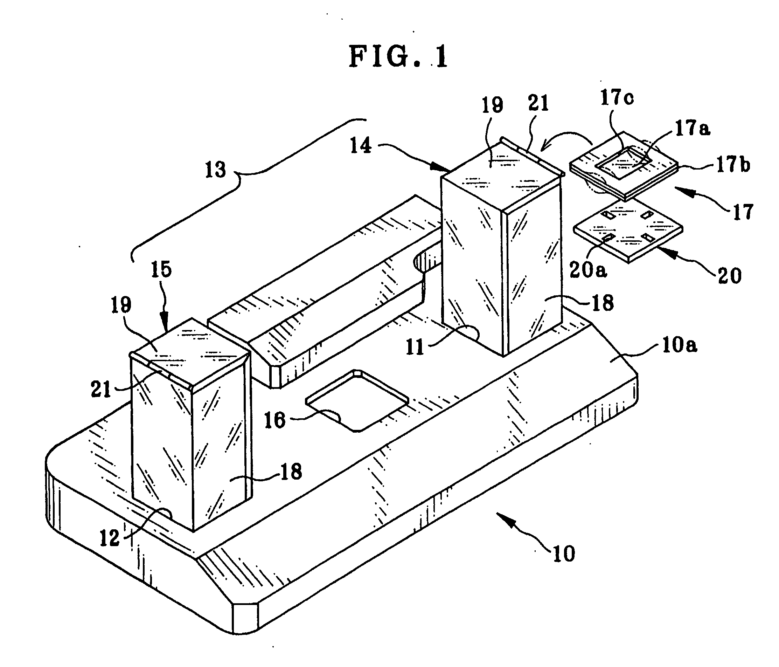

In Fig. 1, a photo film carrier 10 of the present invention is depicted. There are a first setting opening 11 on a supply side, and a second setting opening 12 on a withdrawing side. Slide mount cartridges 13 or slide mount holder are set at respectively the first and second setting openings 11 and 12. The slide mount cartridges 13 are constituted by a supply cartridge 14 or supply slide mount holder, and a withdrawing cartridge 15 or withdrawing slide mount holder. A reading opening 16 is formed between the first and second setting openings 11 and 12 in the photo film carrier 10. A slide mount 17 or transparency is read through the reading opening 16 by a line CCD scanner or other reading devices.

The slide mount cartridges 13 are constituted by a cartridge body 18 or slide mount holder body, and a lid 19. The cartridge body 18 is formed from transparent resin of a synthetic type, has three walls, and is in a channel shape as viewed in section. A stack of a plurality of the slide mounts 17 and a sorting card 20 are treated together and inserted in the space inside the cartridge body 18. A hinge 21 keeps the lid 19 rotatable relative to the cartridge body 18, so the lid 19 swings between open and closed positions. When the lid 19 is in the open position, lateral and upper openings of the cartridge body 18 are open, to allow setting of the slide mounts 17. When the lid 19 is in the closed position, the slide mount cartridge 13 is in a shape of the rectangular quadrilateral prism as the lid 19 is fitted on the cartridge body 18.

Each slide mount 17 includes a reversal photo film piece 17a or segment, and a mount panel 17b or frame holder. Materials and specifics of the mount panel are different between types of the slide mount 17, and depend on manufacturers. Some of the types of the slide mount 17 has the mount panel 17b of a very soft material. It is likely that central portions suspend with the weight according to various manner of supporting the mount panel 17b. Furthermore, the middle of the edge portions of the mount panel 17b is likely to have a bulged state in comparison with end portions. Note that, in the drawings, the bulged state is exaggerated, and has a less conspicuous size than it looks in the drawings. However, the bulged state is still significant because of occurrence of multi-feeding of the slide mounts. The sorting card 20 is used to sort the slide mounts 17 according to each order in such a manner that a first series of the slide mounts 17 ends before the sorting card 20 and a second series starts after the sorting card 20. There are card discrimination holes 20a formed in the sorting card 20, which are detected by a slide mount sensor 42 to be described later, and keep the sorting card 20 discernible from the slide mounts 17 that do not have the card discrimination holes 20a.

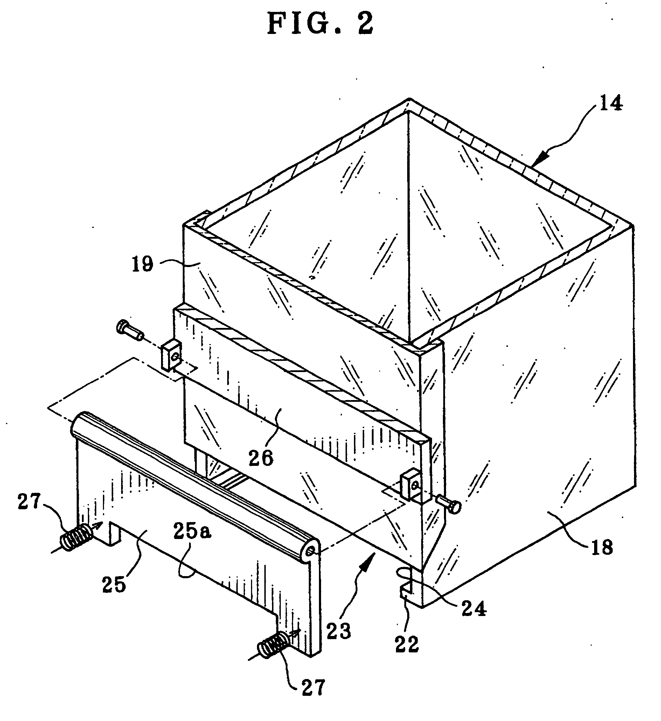

In Fig. 2, lower support ridges 22 are formed to protrude from edges of the cartridge body 18. A lower opening 23 is defined between the lower support ridges 22. The lower support ridges 22 support lateral edge portions of the slide mounts 17 stacked inside the cartridge body 18. An inner space of the cartridge body 18 is open to the bottom through the lower opening 23. The slide mounts 17 are accessible through the lower opening 23 by various external elements, including a feeder mechanism 30, a withdrawing roller 36 and the like. The slide mounts 17 are fed or withdrawn through the lower opening 23. A passage slot 24 is defined between the lower support ridges 22 and the lid 19 at a given width, and is adapted for passage of the slide mount 17 being fed.

A multi-feeding eliminator plate 25 is disposed in the vicinity of the passage slot 24 of the supply cartridge 14, and prevents two slide mounts 17 from being fed simultaneously. A support 26 is disposed on the side of a carrier body 10a, and supports the multi-feeding eliminator plate 25 in a rotatable manner. Two bias springs 27 bias the multi-feeding eliminator plate 25. The bias springs 27 have a first end portion secured to the multi-feeding eliminator plate 25, and a second end portion secured to the photo film carrier 10, and causes the multi-feeding eliminator plate 25 to close a part of the passage slot 24. A plate recess 25a is formed in the multi-feeding eliminator plate 25. The plate recess 25a has such a size that, if a bulged portion exists at the middle of the slide mount 17 in the direction crosswise to the feeding, the bulged portion can pass the plate recess 25a in feeding the slide mount 17.

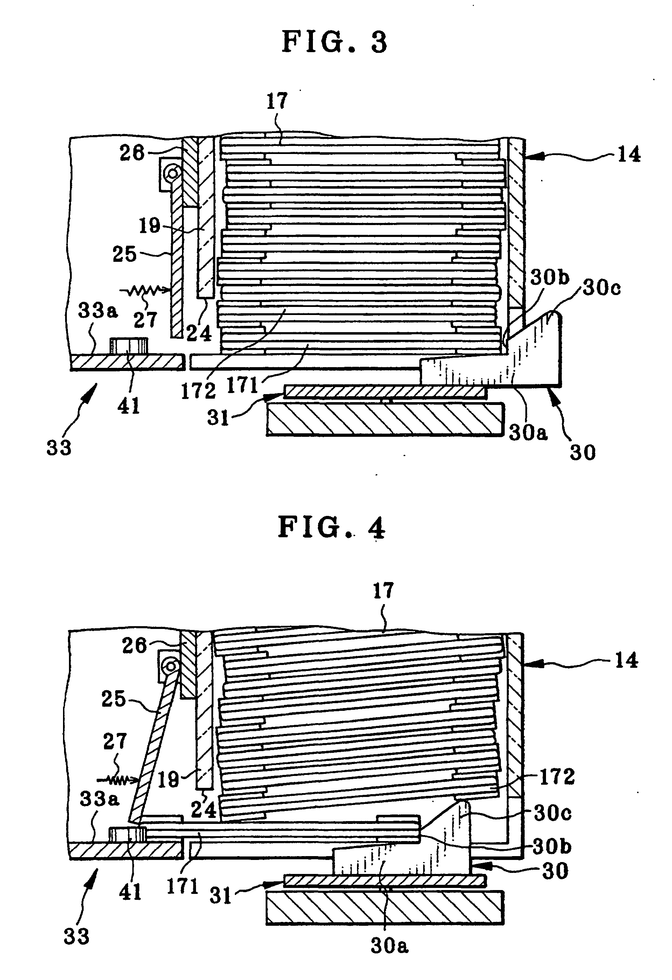

In Figs. 3-6, the feeder mechanism 30 is disposed under the supply cartridge 14, and is constituted by a feeder base plate 30a, a claw portion 30b and a slide mount separator projection 30c. There is a cam 31 to be described later. The feeder base plate 30a is connected with the cam 31, and receives the slide mount 17. The claw portion 30b projects from the feeder base plate 30a erectly, and contacts a rear end of the slide mount 17.

The slide mount separator projection 30c projects in a triangular shape. A second lowest slide mount 172 is disposed over a lowest slide mount 171. When the feeder mechanism 30 moves back and forth, the slide mount separator projection 30c contacts the second lowest slide mount 172. An upper end portion of the slide mount separator projection 30c is rounded, namely, has a surface being partially cylindrical. The cylindrical portion is effective in reducing frictional resistance in contact of the slide mount separator projection 30c to the second lowest slide mount 172. Thus, load to the feeder mechanism 30 in the back-and-forth movement is reduced. A size of the slide mount separator projection 30c is so determined as to raise the second lowest slide mount 172 for the purpose of interference of an inner edge 17c of the mount panel 17b of the lowest slide mount 171 with the inner edge 17c of the mount panel 17b of the second lowest slide mount 172. Note that the size or height of the slide mount separator projection 30c may be suitably determined in consideration of an amount of flexing the slide mounts 17.

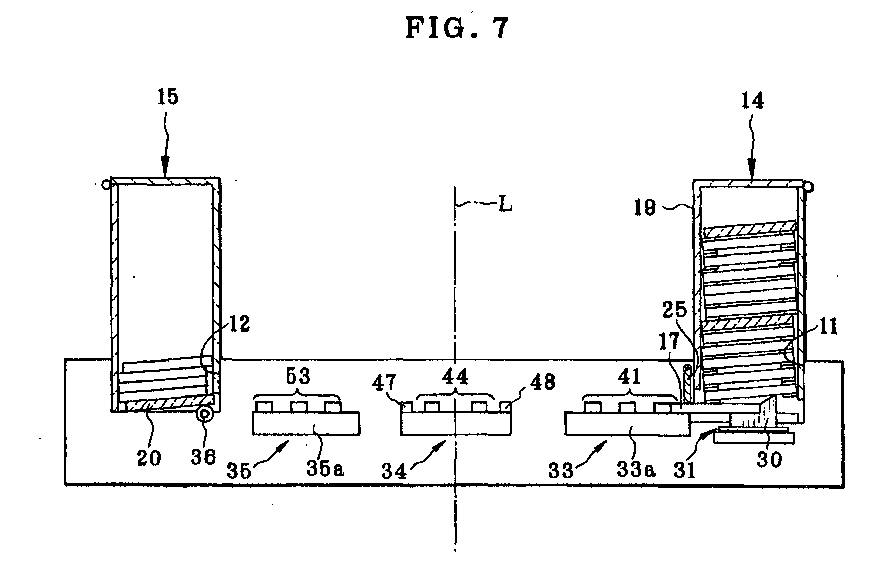

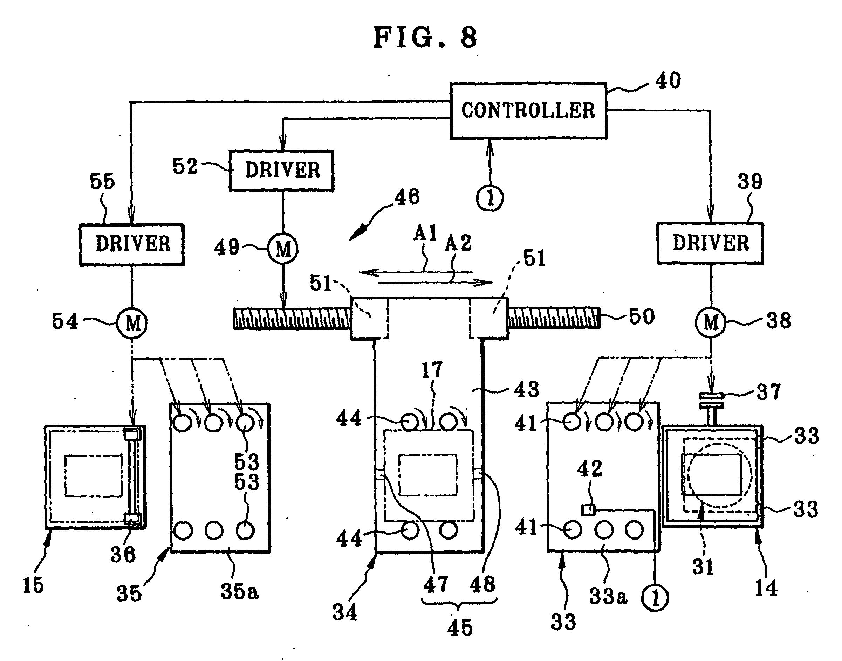

In Fig. 7, the photo film carrier 10 is viewed from the front side. In Fig. 8, internal elements of the photo film carrier 10 are illustrated. A slide mount supply section 33, a movable slide stage 34 and a slide mount withdrawing section 35 are disposed in the photo film carrier 10 as well as the feeder mechanism 30 and the withdrawing roller 36.

The feeder mechanism 30 feeds the lowest slide mount 171 to the slide mount supply section 33 as described before. A supply motor 38 drives the cam 31. A clutch 37 is connected between the supply motor 38 and the cam 31, and changes over the transmission of rotation between those. A motor driver 39 is connected with the supply motor 38. A controller 40 controls the clutch 37 and the supply motor 38 by means of the motor driver 39. Also, feeder rollers 41 are driven by the supply motor 38 in addition to the cam 31. When the feeder mechanism 30 moves back and forth to feed the slide mount 17 to the slide mount supply section 33, then the controller 40 turns off the clutch 37, and discontinues transmission of rotation of the supply motor 38 to the cam 31. Then the supply motor 38 is turned on to continue feeding the slide mount 17 in the slide mount supply section 33.

A path base plate 33a and the feeder rollers 41 having three pairs constitute the slide mount supply section 33. The slide mount 17 fed by the feeder mechanism 30 is squeezed by the feeder rollers 41, and sent to the movable slide stage 34. The feeder rollers 41 are driven by the supply motor 38 to rotate. The slide mount sensor 42 is disposed in the slide mount supply section 33 for detecting the slide mount 17 and the sorting card 20. The slide mount sensor 42 detects a front end of the slide mount 17 or the sorting card 20, and sends a detection signal to the controller 40. See Fig. 8. The card discrimination holes 20a in the sorting card 20 is detected by the slide mount sensor 42 to discern the sorting card 20 from the slide mount 17.

The movable slide stage 34 includes a stage body 43, two sets of feeder rollers 44, a projection set 45 and a stage moving mechanism 46. The stage body 43 is moved by the stage moving mechanism 46 between first and second positions, and when in the first position, receives the slide mount 17 from the slide mount supply section 33, and when in the second position, advances the slide mount 17 to the slide mount withdrawing section 35. The feeder rollers 44 feed the slide mount 17 from the slide mount supply section 33 to an image reading position in the movable slide stage 34, and also feed the slide mount 17 to the slide mount withdrawing section 35 after the image reading. The projection set 45 includes regulating projections 47 and 48, which keep the slide mount 17 retained in the image reading position.

The stage moving mechanism 46 includes a scan motor 49, a screw rod 50 and a female thread 51. Rotation of the scan motor 49 in forward and backward directions is converted by the screw rod 50 into back-and-forth movement of the stage body 43. While the stage body 43 is moved forwards in the direction A1 for the first time, an image in the slide mount 17 is pre-scanned. Then the stage body 43 is moved back in the direction A2. While the stage body 43 is moved forwards in the direction A1 for the second time, an image in the slide mount 17 is finely scanned, which is operation of fine scanning. The pre-scanning and the fine scanning are effected by the line CCD scanner (not shown) actuated in synchronism with feeding of the movable slide stage 34. There is a motor driver 52 for driving the scan motor 49.

The slide mount 17 after the image reading is sent to the slide mount withdrawing section 35. Three pairs of feeder rollers 53 are included in the slide mount withdrawing section 35 with a feeding path 35a, and feed the slide mount 17 to the withdrawing cartridge 15.

The withdrawing roller 36 is disposed in the second setting opening 12. In Fig. 8, a withdrawing motor 54 causes the withdrawing roller 36 to rotate for a predetermined time, to draw the slide mount 17 from the slide mount withdrawing section 35 into the withdrawing cartridge 15. The slide mount 17 being withdrawn is set to a position that is under the lowest of the stacked slide mounts in the withdrawing cartridge 15. There is a motor driver 55 for driving the withdrawing motor 54.

The operation of the present embodiment is described now. At first, a reading start key in an operation panel is operated, to input a reading start signal. In response, the controller 40 causes the motor driver 39 to operate the clutch 37. The supply motor 38 becomes connected with the cam 31 for transmitting rotation.

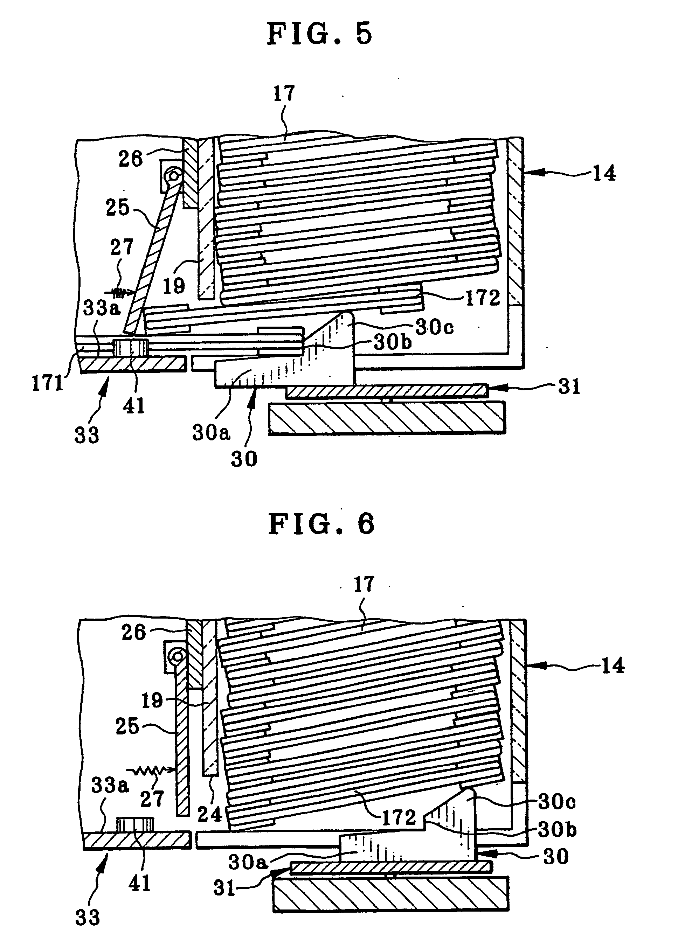

The controller 40 starts driving the supply motor 38 next. In Fig. 4, the cam 31 is rotated, and the feeder mechanism 30 moves. The feeder mechanism 30 is fitted on the rear end of the lowest slide mount 171, and pushes the lowest slide mount 171 in the forward direction. Thus, the lowest slide mount 171 is fed through the passage slot 24.

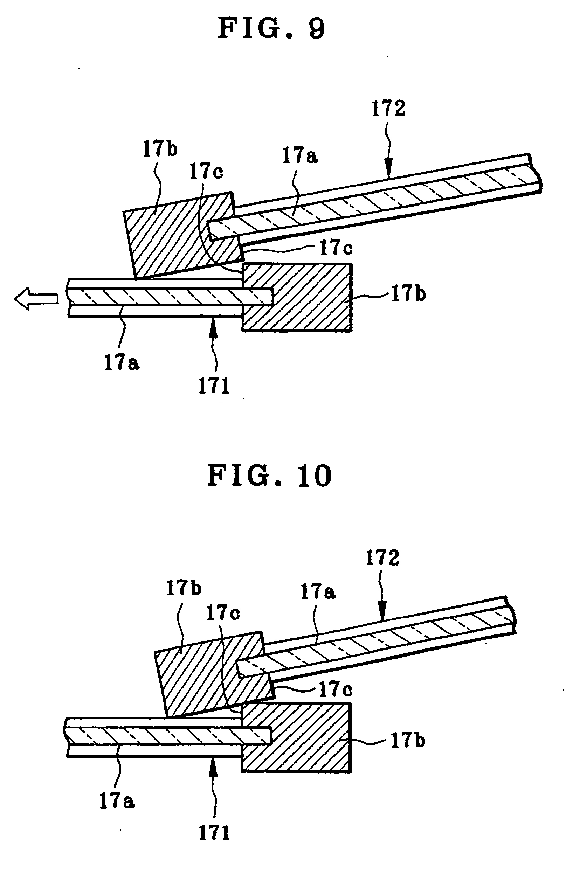

The slide mount separator projection 30c of the feeder mechanism 30 pushes up the rear portion of the second lowest slide mount 172. In Fig. 9, the inner edge 17c of the mount panel 17b of the second lowest slide mount 172 is raised to a height enough to be away from that of the mount panel 17b of the lowest slide mount 171. In Fig. 10, the lowest slide mount 171 is safely fed in a separate manner from the second lowest slide mount 172, because of separation of the mount panel 17b.

In Fig. 5, the feeder mechanism 30 is moved to the forward position by rotation of the cam 31. The slide mount 17 is sent to the slide mount supply section 33. After the slide mount 17 is fed out as illustrated in Fig. 6, the multi-feeding eliminator plate 25 is rotated in the counterclockwise direction by the bias springs 27, to close the passage slot 24 partially. The cam 31 continues rotating, to move the feeder mechanism 30. When the feeder mechanism 30 comes to the original position of Fig. 3, the feeder mechanism 30 is stopped.

The above described construction includes the slide mount separator projection 30c at the feeder mechanism 30 for preventing multi-feeding. Furthermore, a stepped portion to be described can be formed in the path base plate 33a for the slide mount 17, to ensure prevention of multi-feeding, which will be hereinafter described.

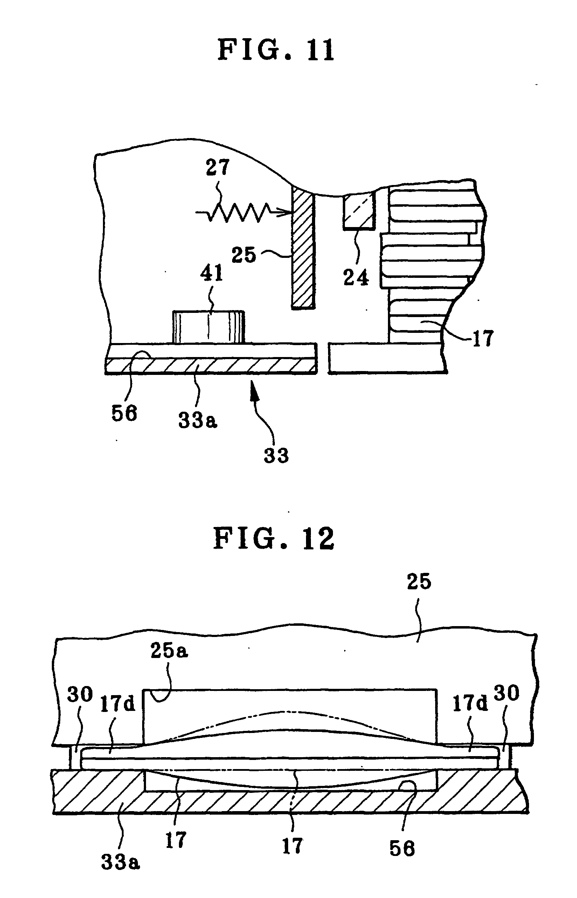

In Figs. 11 and 12, a construction with a path recess 56 in the path base plate 33a is illustrated. The slide mount 17 has lateral edge portions 17d. The path recess 56 prevents a middle portion of the slide mount 17 from contacting the path base plate 33a, because only the lateral edge portions 17d are supported by the path base plate 33a beside the path recess 56. The path recess 56 has a sufficient depth for the purpose of preventing the middle portion of the slide mount 17 from contacting the path base plate 33a even when the middle portion has a bulged shape.

Let there be flexing on both surfaces of the slide mount 17 to be fed by the feeder mechanism 30. If the path recess 56 does not exist in the path base plate 33a, the lateral edge portions 17d of the slide mount 17 do not contact the path base plate 33a, but are loosely away from the path base plate 33a while fed. At the time of passage of the lowest slide mount 171 through the passage slot 24, the lowest slide mount 171 collides with the multi-feeding eliminator plate 25, because the lowest slide mount 171 does not smoothly pass between the multi-feeding eliminator plate 25 and the path base plate 33a. According to the advance of the lowest slide mount 171, the multi-feeding eliminator plate 25 rotates in the clockwise direction in Fig. 11. The multi-feeding eliminator plate 25 is still biased by the bias springs 27 in the counterclockwise direction, to cause a lower end face of the multi-feeding eliminator plate 25 to contact the lateral edge portions 17d of the lowest slide mount 171. The lateral edge portions 17d are pushed downwards because of the bias springs 27 at the multi-feeding eliminator plate 25. In Fig. 12, the lower bulged portion of the lowest slide mount 171 is pushed up by the path base plate 33a, does not come lower than the level of the lower phantom line. So the upper portion of the lowest slide mount 171 reverse to the lower bulged portion considerably protrudes as indicated by the upper phantom line. The inner edge 17c of the mount panel 17b of the lowest slide mount 171 becomes likely to interfere with that of the mount panel 17b of the second lowest slide mount 172.

Consequently, amounts of flexing the mount panel 17b in the two opposite directions can be set equal to each other, because the bulged portion of the lower middle of the slide mount 17 can be passed through the path recess 56. Thus, the path recess 56 in the path base plate 33a makes it possible to prevent interference between the lowest and second lowest slide mounts 171 and 172 effectively. Note that the depth of the path recess 56 can be determined at any suitable value in consideration of a flexing amount of the slide mount 17.

In the above embodiment, the slide mount separator projection 30c is formed in the feeder mechanism 30. However, a slide mount supply device of the invention may have the path recess 56 in the path base plate 33a for the purpose of preventing multi-feeding without forming the slide mount separator projection 30c in the feeder mechanism 30. This can be utilized specially at the time of small flexing of the slide mount 17.

In the above embodiment, the path recess 56 has vertical side walls and is formed in a channel shape as viewed in section. Alternatively, the path recess 56 may be defined by a concave surface, and formed in a shape of an arc or other curves as viewed in section.

In the above embodiment, the slide mount separator projection 30c is formed with the feeder base plate 30a as one piece. However, a slide mount separator mechanism may be disposed separately from the feeder mechanism 30, and may be moved up and down in synchronism with back-and-forth movement of the feeder mechanism 30. Also, a solenoid may be used for pushing up a rear portion of the second lowest slide mount 172 at the time that interference is likely to occur.

The embodiment has been described as effective for treating the slide mount 17 with bulged portions that have been created because of the difference in the characteristic between the two materials. Furthermore, the construction of the invention is effective in temporary bulging of portions of each slide mount because of the soft material. For example, the mount panel may be formed from soft resin. When both ends are supported by the two support ridges, middle portions of respective sides of the mount panel are likely to flex, to create bulged portions. If such slide mounts are fed according to the prior art, interference may occur to cause an accident to stop the feeding. However, the structure of the present invention is effective also for such interference due to the softness of the mount panel of the slide mounts.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention as claimed, they should be construed as included therein.

## Claims

1. A slide mount supply device for supplying plural slide mounts (17, 171), each of said slide mounts including a photo film piece (17a) having an image frame, and a mount panel (17b) disposed about and secured to said photo film piece, said slide mount supply device comprising:
a cartridge (14), having a tubular shape, for containing said plural slide mounts stacked vertically;
a feeder mechanism (30) for feeding a lowest slide mount (171) among said plural slide mounts to an outside of said cartridge by pushing a rear edge of said lowest slide mount (171); and
a slide mount separator (30c), operable while said feeder mechanism operates, for separating the mount panel of said lowest slide mount from the mount panel of a second lowest slide mount (172) among said plural slide mounts by means of a separator projection upwardly projecting from a rear position of said feeder mechanism with respect to the feeding direction so as to push up a rear portion of said second lowest slide mount (172) over said lowest slide mount.

2. A slide mount supply device as defined in claim 1, further comprising:
a path base member (33a), disposed downstream from said feeder mechanism (30), and on which said slide mount (17, 171) being fed is passed;
a recess (56), formed in said path base member, having a smaller size than a size of said slide mount with reference to a direction crosswise to a feeding direction thereof, for preventing interference between a middle portion of said slide mount and said path base member if said middle portion is bulged.

3. A slide mount supply device as defined in claim 2, wherein said feeder mechanism (30) includes:
a feeder base member for moving under said lowest slide mount (171); and
a claw portion, formed erectly on said feeder base member, for pushing said rear edge of said lowest slide mount.

4. A slide mount supply device as defined in claim 3, further comprising a multi-feeding eliminator for blocking a front end of said second lowest slide mount (172), to prevent said second lowest slide mount from moving together with said lowest slide mount (171) in said feeding direction.

5. A slide mount supply device as defined in claim 1, wherein said cartridge (14) includes a passage slot, formed in a lower portion of a lateral wall, for advancing said lowest slide mount (171);
said multi-feeding eliminator is secured to said cartridge outside said passage slot movably, has a lower edge disposed at a predetermined space from said path base member (33a), said predetermined space being according to a thickness of said slide mount being fed.

6. A slide mount supply device as defined in claim 5, further comprising a bias spring for biasing said multi-feeding eliminator in a direction opposite of said feeding direction.

7. A slide mount supply device as defined in claim 6, wherein said cartridge (14) further includes:
a lower opening, being open downwards, and having a first side line in connection with which said passage slot is formed;
a pair of lower support ridges, formed along second and third side lines of said lower opening extending in said feeding direction, for supporting edge portions of a lower face of said lowest slide mount (171).

## Patentansprüche

1. Dia-Zuführgerät zum Bereitstellen mehrerer Dias (17, 171), von denen jedes ein Photofilmstück (17a) mit einem Bild und einen Diarahmen (17b), der um das Filmstück herum angeordnet und an diesem befestigt ist, aufweist, wobei das Dia-Zuführgerät enthält:
ein Magazin (14) rohrförmiger Gestalt zur Aufnahme der mehreren vertikal gestapelten Dias;
einen Transporteur (30) zum Transportieren eines untersten Dias (171) von den mehreren Dias aus dem Magazin durch Drücken gegen eine hintere Kante des untersten Dias (171); und
einen Diaseparator (30c), der während des Betriebs des Transporteurs betreibbar ist, um den Diarahmen des untersten Dias von dem Diarahmen eines zweituntersten Dias (172) der mehreren Dias mit Hilfe eines Trennvorsprungs zu trennen, der von einer hinteren Stelle des Transporteurs in Bezug auf die Transportrichtung nach oben ragt, um einen hinteren Bereich des zweituntersten Dias (172) über das unterste Dia nach oben zu drücken.

2. Gerät nach Anspruch 1, weiterhin umfassend:
ein stromabwärts bezüglich des Transporteurs (30) angeordnetes Bahnelement (33a), auf dem das transportierte Dia (17, 171) läuft;
eine in dem Bahnelement ausgebildete Vertiefung (56) mit einer geringeren Größe als das Dia in einer Richtung quer zu dessen Transportrichtung, um eine Kollision zwischen einem Mittelbereich des Dias und dem Bahnelement zu verhindern, wenn sich der Mittelbereich aufwölbt.

3. Gerät nach Anspruch 2, bei dem der Transporteur (30) enthält:
ein Transporteurbasiselement, das unterhalb des unteren Dias (171) beweglich ist; und
einen Klauenteil, aufrecht stehend ausgebildet auf dem Transporteurbasiselement, um die hintere Kante des untersten Dias zu stoßen.

4. Gerät nach Anspruch 3, weiterhin umfassend eine Mehrfachzufuhrsperre zum Blockieren eines vorderen Endes des zweituntersten Dias (172), um zu verhindern, daß das zweitunterste Dia sich zusammen mit dem untersten Dia (171) in Transportrichtung bewegt.

5. Gerät nach Anspruch 1, bei dem das Magazin (14) einen in einem unteren Bereich einer Seitenwand gebildeten Kanalschlitz enthält, um das unterste Dia (171) vorzurücken;
wobei die Mehrfachzufuhrsperre an dem Magazin außerhalb des Kanalschlitzes beweglich angebracht ist, mit einer unteren Kante in einem vorbestimmten Abstand von dem Bahnelement (33a) angeordnet ist, wobei dieser vorbestimmte Abstand sich durch die Dicke des transportierten Dias bestimmt.

6. Gerät nach Anspruch 5, weiterhin umfassend eine Vorspannfeder zum Vorspannen der Mehrfachzufuhrsperre in einer Richtung entgegen der Transportrichtung.

7. Gerät nach Anspruch 6, bei dem das Magazin (14) weiterhin enthält:
eine nach unten mündende Öffnung mit einer ersten Seitenlinie, in deren Verbindung der Kanalschlitz ausgebildet ist;
ein Paar unterer Trägerleisten, ausgebildet entlang einer zweiten und einer dritten Seitenlinie der unteren Öffnung und sich in Transportrichtung erstrekkend, um Randbereiche einer Unterseite des untersten Dias (171) abzustützen.

## Revendications

1. Dispositif d'alimentation en cadres pour diapositives pour délivrer plusieurs cadres pour diapositives (17, 171), chacun desdits cadres pour diapositives comprenant un élément de film photographique (17a) comportant une trame d'image et un panneau de cadre (17b) disposé autour dudit élément de film photographique et fixé à celui-ci, ledit dispositif d'alimentation en cadres pour diapositives comprenant :
une cartouche (14), de forme tubulaire, pour contenir ladite pluralité de cadres pour diapositives empilés verticalement ;
un mécanisme d'avance (30) pour avancer un cadre pour diapositive inférieur (171) parmi ladite pluralité de cadres pour diapositives à l'extérieur de ladite cartouche en poussant un bord arrière dudit cadre pour diapositive inférieur (171) ; et
un dispositif de séparation de cadres pour diapositives (30c), pouvant être mis en oeuvre tandis que ledit mécanisme d'avance fonctionne, pour séparer le panneau de cadre dudit cadre pour diapositive inférieur du panneau de cadre d'un deuxième cadre pour diapositive inférieur (172) parmi ladite pluralité de cadres pour diapositives au moyen d'une protubérance de dispositif de séparation qui s'étend vers le haut à partir d'une position arrière dudit mécanisme d'avance par rapport à la direction d'avance de manière à pousser vers le haut une partie arrière dudit deuxième cadre pour diapositive inférieur (172) sur ledit cadre pour diapositive inférieur.

2. Dispositif d'alimentation en cadres pour diapositives selon la revendication 1, comprenant en outre :
un élément de base de trajet (33a), disposé en aval dudit mécanisme d'avance (30), et sur lequel passe ledit cadre pour diapositive (17, 171) avancé;
un évidement (56), formé dans ledit élément de base de trajet, dont la dimension est inférieure à une dimension dudit cadre pour diapositive en faisant référence à une direction transversale à une direction d'avance de celui-ci, pour éviter une interférence entre une partie centrale dudit cadre pour diapositive et ledit élément de base de trajet si ladite partie centrale est bombée.

3. Dispositif d'alimentation en cadres pour diapositives selon la revendication 2, dans lequel ledit mécanisme d'avance (30) comprend :
un élément de base d'avance destiné à se déplacer sous ledit cadre pour diapositive inférieur (171) ; et
une partie à griffes, formée verticalement sur ledit élément de base d'avance, pour pousser ledit bord arrière dudit cadre pour diapositive inférieur.

4. Dispositif d'alimentation en cadres pour diapositives selon la revendication 3, comprenant en outre un dispositif d'élimination d'avances multiples pour bloquer une extrémité avant dudit deuxième cadre pour diapositive inférieur (172), afin d'empêcher ledit deuxième cadre pour diapositive inférieur de se déplacer en même temps que ledit cadre pour diapositive inférieur (171) dans ladite direction d'avance.

5. Dispositif d'alimentation en cadres pour diapositives selon la revendication 1, dans lequel ladite cartouche (14) comprend une fente de passage, formée dans une partie inférieure d'une paroi latérale, pour avancer ledit cadre pour diapositive inférieur (171) ;
ledit dispositif d'élimination d'avances multiples est fixé de façon mobile à ladite cartouche à l'extérieur de ladite fente de passage, a un bord inférieur disposé à une distance prédéterminée dudit élément de base de trajet (33a), ladite distance prédéterminée étant fonction d'une épaisseur dudit cadre pour diapositive avancé.

6. Dispositif d'alimentation en cadres pour diapositives selon la revendication 5, comprenant en outre un ressort d'application pour appliquer ledit dispositif d'élimination d'avances multiples dans une direction opposée à ladite direction d'avance.

7. Dispositif d'alimentation en cadres pour diapositives selon la revendication 6, dans lequel ladite cartouche (14) comprend en outre :
une ouverture inférieure, ouverte vers le bas, et comportant une première ligne latérale en relation avec laquelle ladite fente de passage est formée ;
deux arêtes de support inférieures, formées le long de deuxième et troisième lignes latérales de ladite ouverture inférieure s'étendant dans ladite direction d'avance, pour supporter des parties de bord d'une face inférieure dudit cadre pour diapositive inférieur (171).
